# EUROPÄISCHE PATENTANMELDUNG

(11) **EP 3 214 140 A1**
(43) Veröffentlichungstag der Anmeldung: **06.09.2017**
(21) Anmeldenummer: 16158325.7
(22) Anmeldetag: 02.03.2016
(51) Int. Cl.: C09D 5/00, C09D 125/00, G01J 3/46, G09F 5/04

(54) **FARBTONKARTENSTOSS UND VERWENDUNG EINER FARBZUSAMMENSETZUNG FÜR DIE FARBBESCHICHTUNG VON FARBTONKARTEN EINES FARBTONKARTENSTOSSES**

(71) Anmelder: DAW SE, 64372 Ober-Ramstadt (DE)
(72) Erfinder: WEBER, Enno, 64372 Ober-Ramstadt (DE); EIGENBRODT, Dirk, 64397 Modautal (DE); WEINHOLDT, Petra, 64572 Büttelborn (DE)
(74) Vertreter: Metten, Karl-Heinz

(57) **Zusammenfassung**

Die vorliegende Erfindung betrifft einen Farbtonkartenstoß umfassend eine Vielzahl an Farbtonkarten mit Farbbeschichtungen mit unterschiedlichen Farbtönen, wobei die Farbbeschichtungen aus Farbzusammensetzungen gebildet sind, die jeweils mindestens ein Pigment enthalten, das ebenfalls in einem Beschichtungsmaterial (auch korrespondierendes Beschichtungsmaterial genannt), insbesondere Anstrich- oder Putzmaterial für Innenwand-, Außenwand-, Decken- oder Bodenbeschichtungen, vorliegt, wobei die Farbtöne der aus den Farbzusamrnensetzungen auf den Farbtonkarten erhaltenen Farbbeschichtungen jeweils paramer, insbesondere metamer, sind zu den Farbtönen der mit den korrespondierenden Beschichtungsmaterialien, enthaltend das mindestens eine übereinstimmende Pigment, erhaltenen Flächenbeschichtungen, insbesondere Innenwand-, Außenwand- oder Bodenbeschichtungen. Ferner betrifft die Erfindung die Verwendung einer Farbzusammensetzung für die Farbbeschichtung von Farbtonkarten eines Farbtonkartenstoßes. Außerdem betrifft die Erfindung die Verwendung einer Farbzusammensetzung für die Farbbeschichtung von Farbtonkarten eines Farbtonkartenstoßes und eines korrespondierenden Beschichtungsmaterials für die Herstellung einer farbigen Flächenbeschichtung, insbesondere einer Innenwand-, Außenwand-, Decken- oder Bodenbeschichtung. Des Weiteren betrifft die Erfindung ein Farbsystem enthaltend eine Farbzusammensetzung, insbesondere eine Vielzahl an Farbzusammensetzungen, und ein korrespondierendes Beschichtungsmaterial, insbesondere eine Vielzahl an jeweils zu den Farbzusammensetzungen korrespondierenden Beschichtungsmaterialien, die jeweils ein parameres oder metameres Farbpaar bilden. Schließlich betrifft die Erfindung eine Farbtonkarte, insbesondere auf Papier-, Karton- oder Pappe-Basis, mit einer Vorder- und einer Rückseite, enthaltend auf der Vorder- und/oder der Rückseite eine Farbbeschichtung aus einer Farbzusammensetzung.

## Beschreibung

Die vorliegende Erfindung betrifft einen Farbtonkartenstoß umfassend eine Vielzahl an Farbtonkarten. Ferner betrifft die Erfindung die Verwendung von Farbzusammensetzungen für die Farbbeschichtung von Farbtonkarten des erfindungsgemäßen Farbtonkartenstoßes.

Farbtonkartenfächer sind seit langen bekannt als unverzichtbare Entscheidungshilfe bei der Wahl eines Farbtons, der für einen Anstrich zu verwenden ist. Exemplarisch sei auf die DE 203 00 802, DE 10 2006 047 703, DE 10 2006 022 338 A1 und DE 198 38 850A1 verwiesen.

Noch heute werden für die Einfärbung von Farbtonkarten regelmäßig Farbzusammensetzungen auf der Basis von Cellulosenitrat als Bindemittel verwendet. Diese zeichnen sich im Allgemeinen durch eine schnelle Trocknungsgeschwindigkeit aus. Farb- bzw. Lacksysteme auf Cellulosenitratbasis, auch Nitrocellulosefarben bzw. -lacke genannt, liefern jedoch häufig Anstriche, die witterungsempfindlich, wenig lichtecht und wenig beständig gegen Chemikalien, Wasser und Wärme sind. Es wird demgemäß versucht, den für eine Farbtonkarte vorgesehenen Farbton einer sogenannten Nitrocellulosefarbe bzw. eines Nitrocelluloselackes möglichst optimal an den Farbton eines kommerziellen Beschichtungsmaterials, das sich eines anderen Bindemittels als Cellulosenitrat bedient, anzugleichen. Hierbei ist zu berücksichtigen, dass die für Nitrocellulosefarben und -lacke geeigneten Pigmente nicht übereinstimmen mit denjenigen Pigmenten, die in der Fassadenfarbe zum Einsatz kommen und die in diesen Fassadenfarben einen im Wesentlichen identischen Fahreindruck erzeugen sollen. Ein entsprechendes Vorgehen wurde gemäß der DE 694 00 110 T2 mit Farbzusammensetzungen auf der Basis von Acrylaten als Bindemittel versucht. Die vorangehend geschilderten Ansätze führen nicht selten zu unbefriedigenden Ergebnissen. Es hat sich als nicht trivial erwiesen, zu einem System zu gelangen, bei dem der Farbton des Farbfächers, der als Entscheidungsgrundlage für die Auswahl eines Beschichtungsmaterials für eine Flächenbeschichtung, beispielsweise einer Anstrichfarbe oder eines eingefärbten Beschichtungsmittels, z.B. Putzes oder einer Bodenbeschichtung, dienen soll, völlig übereinstimmt mit dem Farbton der fertigen, getrockneten Flächenbeschichtung.

Ein weiteres Problem, das sich im Zusammenhang mit der Verwendung von Farbtonkartenfächern stellt, geht zurück auf die relative Verschiebbarkeit benachbarter Farbtonkarten in einem Farbtonkartenfächer. Beim Sichten einzelner Farbtonkarten werden diese gegenüber benachbarten Farbtonkarten verschoben. Hierbei treten mitunter sehr hohe Scherkräfte auf. Diese Scherkräfte können zu einem Abrieb oder Abblättern der Farbbeschichtung auf der Farbtonkarte führen und damit zu einer Verfälschung bzw. Veränderung des ursprünglich abgebildeten Farbtons. Hierdurch wird der Farbtonfächer im Grunde unbrauchbar. Ferner dürfen benachbarte Farbtonkarten in einem Farbtonkartenfächer nicht zu stark aneinander haften. D.h. die auf den Farbkarten aufgebrachten Fahrbeschichtungen dürfen nur über eine geringe Blockfestigkeit verfügen. Denn ansonsten lassen sich Farbtonkarten nur schwer vereinzeln, was einer benutzerfreundlichen Handhabung entgegensteht. Des Weiteren hat es sich als nicht trivial erwiesen, zu Farbeschichtungen auf Farbtonkarten aus Papier oder Karton zu gelangen, ohne dass die Farbbeschichtung an ihren Rändern beim Vereinzelten mittels Stanzens oder Schneidens beeinträchtigt wird. Obige Vorgaben konnten bislang nur von Farbtonkartenbeschichtungen auf Basis von Nitrocellulose als Bindemittel erhalten werden.

Daher lag der vorliegenden Erfindung die Aufgabe zu Grunde, zu Farbtonkartensystemen zu gelangen, die nicht mehr mit den Nachteilen des Stands der Technik behaftet sind und die insbesondere eine farbechte Wiedergabe des Farbtons einer Flächenbeschichtung, insbesondere einer Innenwand-, Außenwand-, Decken- und/oder Bodenbeschichtungsfarbe und/oder einer eingefärbten Putzbeschichtung auf einer Farbtonkarte ermöglichen.

Demgemäß wurde ein Farbtonkartenstoß umfassend eine Vielzahl an Farbtonkarten mit Farbbeschichtungen mit unterschiedlichen Farbtönen gefunden, bei dem die Farbbeschichtungen aus Farbzusammensetzungen gebildet sind, die jeweils mindestens ein Pigment enthalten, das ebenfalls in einem Beschichtungsmaterial (auch korrespondierendes Beschichtungsmaterial genannt), insbesondere Anstrichmaterial für Innenwand-, Außenwand-, Decken- oder Bodenbeschichtungen, vorliegt, wobei die Farbtöne der aus den Farbzusammensetzungen auf den Farbtonkarten erhaltenen Farbbeschichtungen jeweils paramer, insbesondere metamer, sind zu den Farbtönen der mit den korrespondierenden Beschichtungsmaterialien, enthaltend das mindestens eine übereinstimmende Pigment, erhaltenen Flächenbeschichtungen, insbesondere Innenwand-, Außenwand- oder Bodenbeschichtungen.

Der Begriff der Metamerie umschreibt, dass verschieden zusammengesetzte Lichtspektren beim Menschen gleichwohl die gleiche Farbvalenz besitzen, d.h. den gleichen Farbeindruck hervorrufen können. Paare von Farben, die dieses Verhalten zeigen, werden metamer genannt. Ein Farbpaar mit nicht die gleicher Farbvalenz, sondern mit nur näherungsweise demselben Farbeindruck, nennt man paramer. Gemäß der DIN 6172:2014-10 zeichnen sich paramere Objekte dadurch aus, dass sie unter Beleuchtung mit einer gegebenen Standardlichtart Farbreize unterschiedlicher spektraler Leistungsverteilungsfunktion reflektieren, die näherungsweise denselben Farbeindruck hervorrufen. Der sogenannte Farbabstand Delta E zwischen zwei Farben (auch Metamerie-Index genannt) kann gemäß DIN 6172:2014-10 bestimmt werden.

In einer vorteilhaften Ausführungsform kann vorgesehen sein, dass eine Farbbeschichtung aus einer Farbzusammensetzung und die Flächenbeschichtung aus einem korrespondierenden Beschichtungsmaterial einen Metamerie-Index (Farbabstand Delta E) kleiner 4, insbesondere 3 und besonders bevorzugt kleiner 2 aufweisen, bestimmt gemäß DIN 6172:2014-10, aufweisen. Besonders bevorzugt ist es, wenn eine Vielzahl an Farbbeschichtungen, insbesondere sämtliche Farbbeschichtungen, aus Farbzusammensetzungen und die Flächenbeschichtungen aus den korrespondierenden Beschichtungsmaterialen jeweils einen Metamerie-Index (Farbabstand Delta E) kleiner 4, insbesondere 3 und besonders bevorzugt kleiner 2 aufweisen, bestimmt gemäß DIN 6172:2014-10, aufweisen.

Somit zeichnet sich der erfindungsgemäße Farbtonkartenstoß insbesondere dadurch aus, dass der Farbton mindestens einer aus der Farbzusammensetzung auf einer Farbtonkarte erhaltenen Farbbeschichtung übereinstimmt mit dem Farbton, den das korrespondierende Beschichtungsmaterial als Flächenbeschichtung erzeugt, insbesondere die Farbtöne der Vielzahl aus den Farbzusammensetzungen auf den Farbtonkarten erhaltenen Farbbeschichtungen jeweils übereinstimmen mit den Farbtönen, den die jeweils korrespondierenden Beschichtungsmaterialien als Flächenbeschichtung erzeugen.

Besonders bevorzugt ist vorgesehen, dass die Pigmentzusammensetzung mindestens einer Farbzusammensetzung übereinstimmt mit der Pigmentzusammensetzung des korrespondierenden Beschichtungsmaterials und insbesondere dass die Pigmentzusammensetzungen einer Vielzahl an Farbzusammensetzungen, insbesondere sämtliche Farbzusammensetzungen, jeweils übereinstimmen mit den Pigmentzusammensetzungen der korrespondierenden Beschichtungsmaterialien. Pigmentzusammensetzungen von Farbzusammensetzungen und Beschichtungsmaterial stimmen im Sinne der vorliegenden Erfindung überein, wenn sie dasselbe bzw. dieselben Pigmente enthalten. Hierfür ist es nicht nötig, dass das bzw. die Pigmente in gleichen Mengen oder gleichen Mengenverhältnissen vorliegen.

Besonders gute Ergebnisse erhält man auch dadurch, dass mindestens eine Farbzusammensetzung mindestens ein Reinacrylat-Copolymer als Bindemittel enthält und insbesondere auch dadurch, dass eine Vielzahl an Farbzusammensetzungen, insbesondere sämtliche Farbzusammensetzungen, jeweils mindestens ein Reinacrylat-Copolymer enthalten.

In einer weiteren Ausführungsform zeichnen sich die erfindungsgemäßen Farbtonkartenstoß dadurch aus, dass mindestens eine Farbzusammensetzung, bevorzugt eine Vielzahl an Farbzusammensetzungen und besonders bevorzugt sämtliche Farbzusammensetzungen kein Cellulosenitrat enthalten. Mit der vorliegenden Erfindung ist es demgemäß möglich, für die Einfärbung bzw. Farbbeschichtung von Farbtonkarten eines Farbtonkartenstoßes, beispielsweise Farbtonfächers, völlig auf Nitrocellulosefarben bzw. -lacke zu verzichten.

Die Farbzusammensetzungen und die jeweils korrespondierenden Beschichtungsmaterialien liefern dabei vorzugsweise im Wesentlichen übereinstimmende Farbeindrücke.

Die Farbtonkarten können auf Papier, Pappe oder Karton basieren oder hieraus bestehen. Sie sind regelmäßig mit einer Vorder- und einer Rückseite ausgestattet. Pappe verfügt im Allgemeinen über ein Flächengewicht von mindestens 600 g/m² und eine Dicke von etwa 1,5 mm oder darüber. Dünneres Material nennt man regelmäßig Karton.

Die mindestens eine Farbbeschichtung kann bei dem erfindungsgemäßen Farbtonkartenstoß in einer Ausführungsform ausschließlich auf den jeweiligen Vorderseiten oder ausschließlich auf den jeweiligen Rückseiten der Farbtonkarten vorliegen. Selbstverständlich ist es auch möglich, dass die Farbbeschichtungen sowohl auf den Vorderseiten als auch auf den Rückseiten der Farbtonkarten des Farbtonkartenstoßes angebracht sind.

Der erfindungsgemäße Farbtonkartenstoß kann in einer Ausführungsvariante als karteikastenähnliche Ansammlung an Farbtonkarten zum Einsatz kommen, d.h. zum Beispiel in einem karteikastenähnlichen Behältnis vorliegen. Des Weiteren kann der erfindungsgemäße Farbtonkartenstoß in Form eines Farbfächers oder in der Art eines gebundenes Buches vorliegen. Demgemäß kann vorgesehen sein, dass der erfindungsgemäße Farbtonkartenstoß ferner eine Befestigungsvorrichtung umfasst eingerichtet und ausgelegt zur beweglichen Befestigung der den Farbtonkartenstoß bildenden Farbtonkarten. Ein erfindungsgemäßer Farbtonkartenstoß in Form eines Farbtonkartenfächers ist bevorzugt.

In einer bevorzugten Ausführungsform des erfindungsgemäßen Farbtonkartenstoßes besteht oder enthält die Farbzusammensetzung
a) 15 bis 40 Gew.-%, bevorzugt 20 bis 35 Gew.-% und besonders bevorzugt 25 bis 30 Gew.-% mindestens eines organischen Bindemittels, insbesondere mindestens eines in Wasser dispergierten oder dispergierbaren Reinacrylat-Copolymers,
b) 5 bis 60 Gew.-%, bevorzugt 10 bis 50 Gew.-% und besonders bevorzugt 15 bis 40 Gew.-% mindestens eines organischen und/oder anorganischen Füllstoffs, bevorzugt calcitischen und/oder silikatischen Füllstoffs,
c) 1 bis 15 Gew.-%, bevorzugt 5 bis 10 Gew.-% und besonders bevorzugt 6 bis 8 Gew.-% mindestens eines Koaleszenzmittels, bevorzugt mindestens eines Glykols, besonders bevorzugt Propylenglykol,
d) 0,1 bis 6 Gew.-%, bevorzugt 0,2 bis 4 Gew.-% und besonders bevorzugt 0,5 bis 3 Gew.-% mindestens eines Additivs,
e) 0,5 bis 20 Gew.-%, bevorzugt 1,2 bis 17 Gew.-% und besonders bevorzugt 1,5 bis 16 Gew.-% mindestens eines organischen und/oder anorganischen Pigments und
f) 10 bis 50 Gew.-%, bevorzugt 15 bis 45 Gew.-% und besonders bevorzugt 20 bis 40 Gew.-% Wasser,
wobei die die Farbzusammensetzung bildenden Komponenten in der Summe stets 100,0 Gew.-% ergeben. Die vorangehenden prozentualen Gewichtsangaben der die Farbzusammensetzung bildenden Komponenten beziehen sich auf den Anteil der Reinsubstanz, d.h. bei Feststoffen auf den Feststoffanteil der jeweiligen Komponente.

Geeignete Additive der Farbzusammensetzungen können dabei ausgewählt sein aus der Gruppe bestehend aus mindestens einem Entschäumer, mindestens einem Netz- und Dispergiermittel, mindestens einem Konservierungsmittel, insbesondere Topfkonservierungsmittel, und beliebigen Mischungen der genannten Komponenten.

In einer besonders bevorzugten Ausführungsform des erfindungsgemäßen Farbtonkartenstoßes besteht oder enthält die Farbzusammensetzung
a) 15 bis 40 Gew.-%, bevorzugt 20 bis 35 Gew.-% und besonders bevorzgut 25 bis 30 Gew.-% mindestens eines organischen Bindemittels,
b1) 0 bis 25 Gew.-%, bevorzugt 5 bis 20 Gew.-% und besonders bevorzugt 8 bis 15 Gew.-% mindestens eines calcitischen Füllstoffs,
b2) 5 bis 35 Gew.-%, insbesondere 10 bis 30 Gew.-% und besonders bevorzugt 12 bis 25 Gew.-% mindestens eines silikatischen Füllstoffs,
c) 1 bis 15 Gew.-%, bevorzugt 5 bis 10 Gew.-% und besonders bevorzugt 6 bis 8 Gew.-% mindestens eines Koaleszenzmittels, bevorzugt mindestens eines Glykols, besonders bevorzugt Propylenglykol,
d) 0,1 bis 6 Ges.-%, bevorzugt 0,2 bis 4 Gew.-% und besonders bevorzugt 0,5 bis 3 Gew.-% mindestens eines Additivs,
e) 0,5 bis 20 Gew.-%, bevorzugt 1,2 bis 17 Gew.-% und besonders bevorzugt 1,5 bis 16 Gew.-% mindestens eines organischen und/oder anorganischen Pigments und
f) 10 bis 50 Gew.-%, bevorzugt 15 bis 45 Gew.-% und besonders bevorzugt 20 bis 40 Gew.-% Wasser,
wobei die die Farbzusammensetzung bildenden Komponenten in der Summe stets 100,0 Gew.-% ergeben. Die vorangehenden prozentualen Gewichtsangaben der die Farbzusammensetzung bildenden Komponenten beziehen sich auf den Anteil der Reinsubstanz, d.h. bei Feststoffen auf den Feststoffanteil der jeweiligen Komponente.

In einer weiteren besonders bevorzugten Ausführungsform des erfindungsgemäßen Farbtonkartenstoßes besteht oder enthält die Farbzusammensetzung
a) 15 bis 40 Gew.-%, bevorzugt 20 bis 35 Gew.-% und besonders bevorzgut 25 bis 30 Gew.-% mindestens eines organischen Bindemittels,
b1) 2 bis 25 Gew.-%, bevorzugt 5 bis 20 Gew.-% und besonders bevorzugt 8 bis 15 Gew.-% mindestens eines calcitischen Füllstoffs,
b2) 5 bis 35 Gew.-%, insbesondere 10 bis 30 Gew.-% und besonders bevorzugt 12 bis 25 Gew.-% mindestens eines silikatischen Füllstoffs,
c) 1 bis 15 Gew.-%, bevorzugt 5 bis 10 Gew.-% und besonders bevorzugt 6 bis 8 Gew.-% mindestens eines Koaleszenzmittels, bevorzugt mindestens eines Glykols, besonders bevorzugt Propylenglykol,
d1) 0,1 bis 2 Gew.-%, bevorzugt 0,2 bis 1,5 Gew.-% und besonders bevorzugt 0,5 bis 1,2 Gew.-% mindestens eines Entschäumers,
d2) 0,05 bis 2 Gew.-%, bevorzugt 0,1 bis 1,5 Gew.-% und besonders bevorzugt 0,3 bis 1,0 Gew.-% mindestens eines Netz- und/oder Dispergiermittels,
d3) 0,01 bis 1 Gew.-%, bevorzugt 0,05 bis 0,7 Gew.-% und besonders bevorzugt 0,1 bis 0,5 Gew.-% mindestens eines Topfkonservierungsmittels,
e) 0,5 bis 20 Gew.-%, bevorzugt 1,2 bis 17 Gew.-% und besonders bevorzugt 1,5 bis 16 Gew.-% mindestens eines organischen und/oder anorganischen Pigments und
f) 10 bis 50 Gew.-%, bevorzugt 15 bis 45 Gew.-% und besonders bevorzugt 20 bis 40 Gew.-% Wasser,
wobei die die Farbzusammensetzung bildenden Komponenten in der Summe stets 100,0 Gew.-% ergeben. Die vorangehenden prozentualen Gewichtsangaben der die Farbzusammensetzung bildenden Komponenten beziehen sich auf den Anteil der Reinsubstanz, d.h. bei Feststoffen auf den Feststoffanteil der jeweiligen Komponente.

Unter geeigneten organischen Bindemittel kann auf in Wasser dispergierte oder dispergierbare Polymere gebildet aus gleichen oder verschiedenen Monomeren zurückgegriffen werden, wobei mindestens eines der Monomere ein Acrylsäureester, Methacrylsäurester, Acrylsäure, Methacrylsäure, Vinylacetat, Vinylchlorid, Versatat, Acrylitril oder eine vinylaromatische Verbindung darstellt. In einer zweckmäßigen Ausgestaltung basiert das in Wasser dispergierte oder dispergierbare Polymer dabei auf i) Acrylsäureestern und Vinylaromaten, insbesondere Styrol, oder auf ii) Acrylsäureestern und Vinylestern mindestens einer Koch-Säure, insbesondere der Versatinsäure, und gegebenenfalls Vinylaromaten, insbesondere Styrol, iii) Vinylacetat/Ethylen-Copolymeren oder iv) Reinacrylathomo- oder -copolymeren. Es hat sich überraschend gezeigt, dass die Farbeindrücke der Farbzusammensetzung als Farbbeschichtung auf einer Farbtonkarte und als Anstrich auf einer Wand, einem Boden oder einer Fassade insbesondere auch dadurch in besonders zuverlässiger und ausgeprägter Weise übereinstimmen, dass das mindestens eine organische Bindemittel ein Reinacrylat-Homopolymer und/oder ein Reinacrylat-Copolymer, insbesondere ein Reinacrylat-Copolymer, umfasst oder hieraus besteht. Vorzugsweise liegt in der Farbzusammensetzung als Bindemittel ausschließlich ein Reinacrylat-Copolymer vor. Reinacrylate umfassen Homo- und insbesondere Copolymere von (Meth)acrylaten, d.h. Acrylaten und/oder Methacrylaten, gegebenenfalls auch mit (Meth)acrylsäure, d.h. Acryl- und/oder Methacrylsäure, als Comonomerbaustein. Die organischen Bindemittel werden herkömmlicherweise in Form einer wässrigen Dispersion eingesetzt. Die Mindestfilmbildetemperaturen der Farbzusammensetzungen, die für die Farbbeschichtung der Farbtonkarten des erfindungsgemäßen Farbtonkartenstoßes zum Einsatz kommen, sind geeigneter Weise kleiner 30 °C, bevorzugt kleiner 24°C und besonders bevorzugt kleiner 20°C. Diese Mindestfilmbildetemperaturen sind mit den vorangehend beschriebenen organischen Bindemitteln realisierbar.

Grundsätzlich kann für die Farbzusammensetzungen des erfindungsgemäßen Farbtonkartenstoßes auf organischen oder anorganischen Füllstoffe oder deren Mischungen zurückgegriffen werden. Für den erfindungsgemäßen Farbtonkartenstoß sind insbesondere auch solche Farbzusammensetzung bevorzugt, bei denen der mindestens Füllstoff über eine mittlere Teilchengröße D50 kleiner oder gleich 30 µm, vorzugsweise kleiner oder gleich 20 µm und besonders bevorzugt kleiner oder gleich 10 µm verfügt. Solche Farbzusammensetzungen sind besonders bevorzugt, bei denen der mindestens eine calcitische Füllstoff, insbesondere Calciumcarbonat, über eine mittlere Teilchengröße D50 kleiner oder gleich 5 µm, vorzugsweise kleiner oder gleich 3 µm und besonders bevorzugt kleiner oder gleich 2 µm verfügt. Bevorzugt wird unter den calcitischen Füllstoffen auf Calciumcarbonat zurückgegriffen. Des Weiteren sind solche Farbzusammensetzungen bevorzugt, bei denen der mindestens eine silikatische Füllstoff über eine mittlere Teilchengröße D50 kleiner oder gleich 30 µm, vorzugsweise kleiner oder gleich 20 µm und besonders bevorzugt kleiner oder gleich 10 µm verfügt. Bevorzugt wird unter den silikatischen Füllstoffen auf Cristobalit zurückgegriffen.

Es hat sich überraschend gezeigt, dass mit den Farbzusammensetzungen des erfindungsgemäßen Farbtonkartenstoßes Farbbeschichtungen auf den Farbtonkarten erhalten werden, die nicht bzw. nur geringfügig aneinander anhaften und die demgemäß zu einem sehr gut handhabbaren Farbtonkartenstoß, insbesondere in Form eines Farbtonkartenfächers, führen. Diese Farbbeschichtungen zeichnen sich demgemäß durch eine sehr geringe Blockfestigkeit aus. Bei einem Blockfestigkeitstest, beispielsweise gemäß DIN EN ISO 9117-2:2010-07, wird dabei regelmäßig nur eine sehr geringe Haftung festgestellt. Die miteinander zur Anlage gebrachten Beschichtungen lassen sich im Allgemeinen gut voneinander trennen, ohne dass z.B. Rückstände verbleiben oder Schäden an der Farbbeschichtung beobachtet werden. Besonders gute Resultate hinsichtlich einer geringen Blockfestigkeit erhält man mit Farbzusammensetzungen, die auf einem Reinacrylat-Copolymer als Bindemittel basieren. Besonders bevorzugt sind hierbei solche Farbzusammensetzungen, die mindestens einen silikatischen Füllstoffe und gegebenenfalls auch mindestens einen calcitische Füllstoffe enthalten, vorzugsweise mit den jeweiligen vorangehend genannten mittleren Teilchengrößen D50. interessanterweise hat sich auch gezeigt, dass die Trocknungsbedingungen in einem weiten Bereich gewählt werden können und dass auch forcierte Trocknungsbedingungen der auf einem Farbtonkartenmaterial aufgebrachten Farbbeschichtung nicht zu einer erhöhten Blockfestigkeit führt.

Unter den geeigneten Koaleszensmitteln kann zum Beispiel bevorzugt auf Glykole zurückgegriffen werden. Geeignete Glykole können ausgewählt sein aus Ethylenglykol, Propylenglycol, Ethylenglycolmonomethylether, Trimethylenglycol, Neopentylglycol, Diethylenglycol, Triethylenglycol, Polyethylenglycol und deren Mischungen. Propylenglykol ist besonders bevorzugt, insbesondere als ausschließliche, d.h. alleinige Glykolkomponente in der beschriebenen Farbzusammensetzung.

Als Pigmente für die Farbzusammensetzungen kommen anorganische oder organische Pigmente sowie deren Mischungen in Betracht. Es können demgemäß Mischungen verschiedener anorganischer oder verschiedener organischer Pigmente oder Mischungen von anorganischen und organischen Pigmenten eingesetzt werden. Die Pigmente haben vorzugsweise eine mittlere Teilchengröße im Bereich von 0, 1 bis 5 µm. Mit Pigmenten in diesem Teilchengrößenbereich lässt sich eine hinreichende Deckkraft erzielen. Geeignete anorganische Pigmente umfassen zum Beispiel Bunt-, Schwarz- und Weißpigmente sowie Glanzpigmente, während organische Pigmente im Allgemeinen Bunt- und Schwarzpigmente liefern.

Als geeignete anorganische Buntpigmente seien genannt Eisen-Mangan-Mischoxid (P.Bk. 33), Chrom-Eisenoxid (P.Br. 29), Zinn-Titan-Zinkoxid (P.O. 82), Zinn-Titan-Zinkoxid (P.Y. 216), Chromoxidgrün (P.G. 17) Chromoxid, Chromoxidhydratgrün; Chromgrün (C.I. Pigment Green 48); Cobaltgrün (C.I. Pigment Green 50); Ultramaringrün; Kobaltblau (C.I. Pigment Blue 28 und 36; C.I. Pigment Blue 72); Ultramarinblau; Manganblau; Ultramarinviolett; Kobalt- und Manganviolett; Eisenoxidrot (C.I. Pigment Red 101); Cadmiumsul-foselenid (C.I. Pigment Red 108); Cersulfid (C.I. Pigment Red 265); Molybdatrot (C.I. Pigment Red 104); Ultramarinrot; Eisenoxidbraun (C.I. Pigment Brown 6 und 7), Mischbraun, Spinell- und Korundphasen (C.I. Pigment Brown 29, 31, 33, 34, 35, 37, 39 und 40), Chromtitangelb (C.I. Pigment Brown 24), Chromorange; Cersulfid (C.I. Pigment Orange 75); Eisenoxidgelb (C.I. Pigment Yellow 42); Nickeltitangelb (C.I. Pigment Yellow 53; C.I. Pigment Yellow 157, 158, 159, 160, 161, 162; 163, 164 und 189); Chromtitangelb; Spinellphasen (C.I. Pigment Yellow 119); Cadmiumsulfid und Cadmiumzinksulfid (C.I. Pigment Yellow 37 und 35); Chromgelb (C.I. Pigment Yellow 34); Bismutvanadat (C.I. Pigment Yellow 184).

Geeignete organische Pigmente können hierbei z.B. ausgewählt werden aus der Gruppe bestehend aus Monoazopigmenten, insbesondere C.I. Pigment Braun 25, C.I. Pigment Orange 5, 13, 36, 38, 64 oder 67, C.I. Pigment Rot 1, 2, 3, 4, 5, 8, 9, 12, 17, 22, 23, 31, 48: 1, 48: 2, 48: 3, 48: 4, 49, 49: 1, 51: 1, 52: 1, 52: 2, 53, 53: 1, 53: 3, 57: 1, 58: 2, 58: 4, 63, 112, 146, 148, 170, 175, 184, 185, 187, 191: 1, 208, 210, 245, 247 und/oder 251, C.I. Pigment Gelb 1, 3, 62, 65, 73, 74, 97, 120, 151, 154, 168, 181, 183 und/oder 191 und/oder C.I. Pigment Violett 32, Diazopigmenten, insbesondere C.I. Pigment Orange 16, 34, 44 und/oder 72 und/oder C.I. Pigment Gelb 12, 13, 14, 16, 17, 81, 83, 106, 113, 126, 127, 155, 174, 176, 18 und/oder 188, Diazokondensationspigmenten, insbesondere C.I. Pigment Gelb 91, 95 und/oder 128 und/oder C.I. Pigment Rot 144, 166, 214, 220, 221, 242 und/oder 262 und/oder C.I. Pigment Braun 23 und/oder 41, Anthranthronpigmenten, insbesondere C.I. Pigment Rot 168, Anthrachinonpigmenten, insbesondere C.I. Pigment Gelb 147, 177 und/oder 199 und/oder C.I. Pigment Violett 31, Anthrapyrimidinpigmenten, insbesondere C.I. Pigment Gelb 108, Chinacridopigmenten, insbesondere C.I. Pigment Orange 48 und/oder 49 und/oder C.I. Pigment Rot 122, 202, 206 und/oder 209 und/oder C.I. Pigment Violett 19, Chinaphthalonpigmenten, insbesondere C.I. Pigment Gelb 138, Diketopyrrolopyrrolpigmenten, insbesondere C.I. Pigment Orange 71, 73 und/oder 81 und/oder C.I. Pigment Rot 254, 255, 264, 270 und/oder 272, Dioxazinpigmenten, insbesondere C.I. Pigment Violett 23 und/oder 37 und, oder C.I. Pigment Blau 80, Flavanthronpigmenten, insbesondere C.I. Pigment Gelb 24, Indanthronpigmenten, insbesondere C.I. Pigment Blau 60 und/oder 64, Isoindolinpigmenten, insbesondere C.I. Pigment Orange 61 und/oder 69 und/oder C.I. Pigment Rot 260 und/oder C.I. Pigment Gelb 139 und/oder 185, Isoindolinonpigmenten, insbesondere C.I. Pigment Gelb 109, 110 und/oder 173, Isoviolanthronpigmenten, insbesondere C.I. Pigment Violett 31, Metallkomplexpigmenten, insbesondere C.I. Pigment Rot 257 und/oder C.I. Pigment Gelb 117, 129, 151, 153 und/oder 177 und/oder C.I. Pigment Grün 8, Perinonpigmenten, insbesondere C.I. Pigment Orange, und/oder C.I. Pigment Rot 194, Perylenpigmenten, insbesondere C.I. Pigment Schwarz 31 und/oder 32 und/oder C.I. Pigment Rot 123, 149, 178, 179, 190 und/oder 224 und/oder C.I. Pigment Violett 29, Phthalocyaninpigmenten, insbesondere C.I. Pigment Blau 15, 15: 1, 15: 2, 15: 3, 15: 4, 15: 6 und/oder 16 und/oder C.I. Pigment Grün 7 und/oder 36, Pyranthronpigmenten, insbesondere C.I. Pigment Orange 51 und/oder C.I. Pigment Rot 216, Pyrazolochinazolonpigmenten, insbesondere C.I. Pigment Orange 67 und/oder C.I. Pigment Rot 251, Thioindigopigmenten, insbesondere C.I. Pigment Rot 88 und/oder 181 und/oder C.I. Pigment Violett 38, Triarylcarboniumpigmenten, insbesondere C.I. Pigment Blau 1, 61 und/oder 62 und/oder C.I. Pigment Grün 1 und/oder C.I. Pigment Rot 81, 81: 1 und/oder 169 und/oder C.I. Pigment Violett 1, 2, 3 und/oder 27, und deren beliebigen Mischungen.

Enthält die Farbzusammensetzung kein Weißpigment, beispielsweise kein Titandioxid, sind sehr kräftige und auch dunkle Farben zugänglich. Enthält die Farbzusammensetzung hingegen mindestens ein Weißpigment, insbesondere Titandioxid, gelangt man regelmäßig zu sogenannten Pastellfarben. Für derartige Ausführungsformen enthält die Farbzusammensetzung vorzugsweise Titandioxid mit einer mittleren Teilchengröße D50 kleiner oder gleich 4 µm, vorzugsweise kleiner oder gleich 2 µm und besonders bevorzugt kleiner oder gleich 1 µm, zum Beispiel mit einer Teilchengröße D50 im Bereich von 0,1 µm bis 0,6 µm. Ist Titandioxid in der Farbzusammensetzung zugegen, liegt dieses insbesondere in einer Menge im Bereich von 1 bis 20 Gew.-%, bevorzugt im Bereich von 2 bis 18 Gew.-% und besonders bevorzugt im Bereich von 5 bis 15 Gew.-% darin vor.

Die Farbzusammensetzung kann neben den vorangehend genannten Füllstoffen des Weiteren auch einen sphärischen partikulären Zusatzstoff, insbesondere sphärische PMMA-Partikel, mit einer Teilchengröße D50 im Bereich von 50 bis 150 µm, bevorzugt im Bereich von 70 bis 120 µm und besonders bevorzugt im Bereich von 90 bis 110 µm, enthalten. Diese sphärischen partikulären Zusatzstoffe verändern den Farbton grundsätzlich nicht, geben der Farbbeschichtung auf der Farbtonkarte jedoch den Eindruck einer Oberfläche mit einer dreidimensionalen Strukturierung. Diese sphärischen partikulären Zusatzstoffe stellen demgemäß keine Farbmittel, insbesondere keine Pigmente dar.

Des Weiteren können die geschilderten Farbzusammensetzungen auch mindestens ein Fasermaterial, insbesondere eine Schnittfaser, enthalten. Besonders bevorzugt werden feine Fasern eingesetzt. Geeignete feinteilige Fasermaterialien sind dem Fachmann geläufig.

Die für die Farbbeschichtungen des erfindungsgemäßen Farbtonkartenstoßes verwendeten Farbzusammensetzungen enthalten in einer zweckmäßigen Ausführungsform mindestens ein Verdickungsmittel.

Die aus der geschilderten Farbzusammensetzung gebildete Farbbeschichtung weist bevorzugt eine Pigmentvolumenkonzentration (PVK) im Bereich von 25 bis 50 %, bevorzugt im Bereich von 30 bis 40 % auf. Insbesondere weisen die aus der Vielzahl an Farbzusammensetzungen gebildeten Farbbeschichtungen jeweils eine Pigmentvolumenkonzentration (PVK) im Bereich von 25 bis 50 %, bevorzugt im Bereich von 30 bis 40 % auf.

Die mit der Farbbeschichtung versehenen Farbtonkarten können zum Beispiel dadurch erhalten werden, dass man zunächst auf einer Substratbahn bzw. -unterlage, beispielsweise aus Papier, Karton oder Pappe, die Farbzusammensetzung aufträgt, beispielsweise mit einem Rakel oder einer Walzbeschichtungsvorrichtung, woraufhin die farbbeschichtete Substratbahn bzw. -unterlage durch einen Ofen gefahren wird. Die Aufenthaltsdauer in dem Ofen kann beispielsweise bis etwa drei Minuten oder auch mehr betragen. Die Trocknungstemperatur kann zum Beispiel auf Werte im Bereich von 50 bis 90°C, vorzugsweise 70 bis 85 °C, eingestellt werden. Die getrocknete farbbeschichtete Substratbahn bzw. -unterlage kann anschließend zu den mit der Farbbeschichtung versehenen Farbtonkarten vereinzelt werden, beispielsweise mittels Stanzens oder Schneidens.

Die der Erfindung zu Grunde liegende Aufgabe wird des Weiteren gelöst durch die Verwendung der vorangehend geschilderten Farbzusammensetzungen für die Farbbeschichtung von Farbtonkarten eines Farbtonkartenstoßes, insbesondere eines erfindungsgemäßen Farbtonkartenstoßes.

Die der Erfindung zu Grunde liegende Aufgabe wird auch gelöst durch ein Farbsystem enthaltend eine Farbzusammensetzung, insbesondere eine Vielzahl an Farbzusammensetzungen, wie sie für den erfindungsgemäßen Farbtonkartenstoß zum Einsatz kommt bzw. kommen, und ein Beschichtungsmaterial, insbesondere eine Vielzahl an Beschichtungsmaterialien, wie sie für den erfindungsgemäßen Farbtonkartenstoß zum Einsatz kommt bzw. kommen.

Mit der vorliegenden Erfindung wurde eine Farbzusammensetzung gefunden, die auch ohne Zellulosenitrat als Bindemittel auf einer Farbtonkarte eine Farbbeschichtung liefert, die im Wesentlichen denselben Farbeindruck erzeugt wie eine Flächenbeschichtung aus einem Beschichtungsmaterial, enthaltend mindestens ein Pigment, das auch in der Farbzusammensetzung vorliegt. Bei der Flächenbeschichtung kann es sich um eine farbige Innenwand-, Außenwand-, Decken-und Bodenbeschichtung handeln. Auch findet die Erfindung Anwendung auf eingefärbte Putze. Als besonders vorteilhaft hat sich auch herausgestellt, dass sich mit den Farbzusammensetzungen des erfindungsgemäßen Farbtonkartenstoßes Farbbeschichtungen auf den Farbtonkarten erhalten lassen, die dann beim Vereinzeln mittels Stanzens oder Schneidens nicht zum Abblättern oder Absplittern im Randbereich neigen. Auch sind diese Farbbeschichtungen gut bedruckt war. Ferner beobachtet man beim Verschieben bzw. Scheren benachbarter Farbtonkarten gegeneinander keinen Abrieb oder kein Abblättern der Farbbeschichtung. Als besonders vorteilhaft hat sich erwiesen, dass benachbarte Farbtonkarten, die zumindest einseitig mit einer Farbtonzusammensetzung des erfindungsgemäßen Farbtonkartenstoßes beschichtet sind, nicht aneinander haften und demgemäß über eine geringe Blockfestigkeit verfügen. Der erfindungsgemäße Farbtonkartenstoß zeichnet sich demnach nicht nur durch eine hohe Farbechtheit aus, sondern ist ebenfalls sehr unproblematisch und ohne Ausschuss herzustellen und vor allem auch sehr gut und dauerhaft handhabbar.

Exemplarisch sei als eine geeignete transparente Basis, das heißt für eine Zusammensetzung, die noch kein bzw. keine Pigmente enthält, für eine für die vorliegende Erfindung geeignete Farbzusammensetzung eine Rezeptur mit den folgenden Komponenten genannt:
- 25,0 Gew.-%: Reinacrylat-Copolymer-Bindemittel (als Feststoff)
- 25,0 Gew.-%: Calciumcarbonat-Füllstoff (d 50 = 1 µm)
- 12,0 Gew.-%: Silikat-Füllstoff (d 50 = 6 µm)
- 2,0 Gew.-%: Propylenglykol
- 0,5 Gew.-%: Entschäumer
- 1,0 Gew.-%: Netzmittel
- 0,2 Gew.-%: Konservierungsmittel
- 0,05 Gew.-%: Verdicker
- 0,06 Gew.-%: pH-Mittel
- 34,19 Gew.-%: Wasser

Ferner sei in entsprechender Weise exemplarisch als eine geeignete Pastell-Basis für eine für die vorliegende Erfindung geeignete Farbzusammensetzung eine Rezeptur mit den folgenden Komponenten genannt:
- 30.0 Gew.-%: Reinacrylat-Copolymer-Bindemittel (als Feststoff)
- 6,5 Gew.-%: TiO2 (d50 = 0,5 µm)
- 2,0 Gew.-%: Calciumcarbonat-Füllstoff (d50 = 1 µm)
- 24,0 Gew.-%: Silikat-Füllstoff (d 50 = 6 µm)
- 3,5 Gew.-%: Propylenglykol
- 0,5 Gew.-%: Entschäumer
- 1,0 Gew.-%: Netzmittel
- 0,2 Gew.-%: Konservierungsmittel
- 0,06 Gew.-%: pH-Mittel
- 32,24 Gew.-%: Wasser

Die vorangehend genannten zwei Rezepturen können zwecks Erhalt der Farbzusammensetzungen mit Pigmenten, z.B. wie vorangehend beschrieben, in einer Menge im Bereich von zum Beispiel 1,5 bis 5 Gew.-% versetzt werden.

Die in der voranstehenden Beschreibung und den Ansprüchen offenbarten Merkmale der Erfindung können sowohl einzeln als auch in jeder beliebigen Kombination für die Verwirklichung der Erfindung vorteilhaft sein.

## Patentansprüche

1. Farbtonkartenstoß umfassend eine Vielzahl an Farbtonkarten mit Farbbeschichtungen mit unterschiedlichen Farbtönen, **dadurch gekennzeichnet, dass** die Farbbeschichtungen aus Farbzusammensetzungen gebildet sind, die jeweils mindestens ein Pigment enthalten, das ebenfalls in einem Beschichtungsmaterial (auch korrespondierendes Beschichtungsmaterial genannt), insbesondere Anstrich- oder Putzmaterial für Innenwand-, Außenwand-, Decken- oder Bodenbeschichtungen, vorliegt, wobei die Farbtöne der aus den Farbzusammensetzungen auf den Farbtonkarten erhaltenen Farbbeschichtungen jeweils paramer, insbesondere metamer, sind zu den Farbtönen der mit den korrespondierenden Beschichtungsmaterialien, enthaltend das mindestens eine übereinstimmende Pigment, erhaltenen Flächenbeschichtungen, insbesondere Innenwand-, Außenwand-, Decken- oder Bodenbeschichtungen.

2. Farbtonkartenstoß nach Anspruch 1, **dadurch gekennzeichnet, dass** die Pigmentzusammensetzung mindestens einer Farbzusammensetzung übereinstimmt mit der Pigmentzusammensetzung des korrespondierenden Beschichtungsmaterials oder dass die Pigmentzusammensetzungen einer Vielzahl an Farbzusammensetzungen, insbesondere sämtliche Farbzusammensetzungen, jeweils übereinstimmen mit den Pigmentzusammensetzungen der korrespondierenden Beschichtungsmaterialien.

3. Farbtonkartenstoß nach Anspruch 1 oder 2, **dadurch gekennzeichnet, dass** mindestens eine Farbzusammensetzung mindestens ein Reinacrylat-Copolymer als Bindemittel enthält oder dass eine Vielzahl an Farbzusammensetzungen, insbesondere sämtliche Farbzusammensetzungen, jeweils mindestens ein Reinacrylat-Copolymer enthalten.

4. Farbtonkartenstoß nach einem der vorangehenden Ansprüche, **dadurch gekennzeichnet, dass**
mindestens eine Farbzusammensetzung, bevorzugt eine Vielzahl an Farbzusammensetzungen und besonders bevorzugt sämtliche Farbzusammensetzungen kein Cellulosenitrat enthalten.

5. Farbtonkartenstoß nach einem der vorangehenden Ansprüche, **dadurch gekennzeichnet, dass**
eine Farbbeschichtung aus einer Farbzusammensetzung und die Flächenbeschichtung aus einem korrespondierenden Beschichtungsmaterial einen Metamerie-Index (Farbabstand Delta E) kleiner 4, insbesondere 3 und besonders bevorzugt kleiner 2 aufweisen, bestimmt gemäß DIN 6172:2014-10, oder dass eine Vielzahl an Farbbeschichtungen, insbesondere sämtliche Farbbeschichtungen, aus Farbzusammensetzungen und die Flächenbeschichtungen aus den korrespondierenden Beschichtungsmaterialen jeweils einen Metamerie-Index (Farbabstand Delta E) kleiner 4, insbesondere 3 und besonders bevorzugt kleiner 2 aufweisen, bestimmt gemäß DIN 6172:2014-10.

6. Farbtonkartenstoß nach einem der vorangehenden Ansprüche, **dadurch gekennzeichnet dass**,
der Farbton mindestens einer aus der Farbzusammensetzung auf einer Farbtonkarte erhaltenen Farbbeschichtung übereinstimmt mit dem Farbton, den das korrespondierende Beschichtungsmaterial als Flächenbeschichtung erzeugt, insbesondere die Farbtöne der Vielzahl aus den Farbzusammensetzungen auf den Farbtonkarten-erhaltenen Farbbeschichtungen jeweils übereinstimmen mit den Farbtönen, den die jeweils korrespondierenden Beschichtungsmaterialien als Flächenbeschichtung erzeugen.

7. Farbtonkartenstoß nach einem der vorangehenden Ansprüche, **dadurch gekennzeichnet, dass**
die Farbtonkarten auf Papier, Pappe oder Karton basieren oder hieraus bestehen und/oder über eine Vorder- und eine Rückseite verfügen.

8. Farbtonkartenstoß nach Anspruch 7, **dadurch gekennzeichnet, dass**
die mindestens eine Farbbeschichtung auf der Vorderseite und/oder der Rückseite mindestens einer Farbtonkarte, insbesondere der Vielzahl an Farbtonkarten, vorliegt.

9. Farbtonkartenstoß nach einem der vorangehenden Ansprüche, ferner umfassend eine Befestigungsvorrichtung eingerichtet und ausgelegt zur beweglichen Befestigung der den Farbtonkartenstoß bildenden Farbtonkarten, insbesondere unter Ausbildung eines Farbtonkartenfächers.

10. Farbtonkartenstoß nach einem der vorangehenden Ansprüche, **dadurch gekennzeichnet, dass**
die Farbzusammensetzung
a) 15 bis 40 Gew.-%, bevorzugt 20 bis 35 Gew.-% und besonders bevorzugt 25 bis 30 Gew.-% mindestens eines organischen Bindemittels, insbesondere mindestens eines in Wasser dispergierten oder dispergierbaren Reinacrylat-Copolymers,
b) 5 bis 60 Gew.-%, bevorzugt 10 bis 50 Gew.-% und besonders bevorzugt 15 bis 40 Gew.-% mindestens eines organischen und/oder anorganischen Füllstoffs, bevorzugt calcitischen und/oder silikatischen Füllstoffs,
c) 1 bis 15 Gew.-%, bevorzugt 5 bis 10 Gew.-% und besonders bevorzugt 6 bis 8 Gew.-% mindestens eines Koaleszenzmittels, bevorzugt mindestens eines Glykols, besonders bevorzugt Propylenglykol,
d) 0,1 bis 6 Gew.-%, bevorzugt 0,2 bis 4 Gew.-% und besonders bevorzugt 0,5 bis 3 Gew.-% mindestens eines Additivs,
e) 0,5 bis 20 Gew.-%, bevorzugt 1,2 bis 17 Gew.-% und besonders bevorzugt 1,5 bis 16 Gew.-% mindestens eines organischen und/oder anorganischen Pigments und
f) 10 bis 50 Gew.-%, bevorzugt 15 bis 45 Gew.-% und besonders bevorzugt 20 bis 40 Gew.-% Wasser enthält,
wobei die die Farbzusammensetzung bildenden Komponenten in der Summe stets 100,0 Gew.-% ergeben.

11. Farbtonkartenstoß nach Anspruch 10, **dadurch gekennzeichnet, dass**
die Farbzusammensetzung
a) 15 bis 40 Gew.-%, bevorzugt 20 bis 35 Gew.-% und besonders bevorzugt 25 bis 30 Gew.-% mindestens eines organischen Bindemittels, insbesondere mindestens eines in Wasser dispergierten oder dispergierbaren Reinacrylat-Copolymers,
b1) 0 bis 25 Gew.-%, bevorzugt 5 bis 20 Gew.-% und besonders bevorzugt 8 bis 15 Gew.-% mindestens eines calcitischen Füllstoffs,
b2) 5 bis 35 Gew.-%, insbesondere 10 bis 30 Gew.-% und besonders bevorzugt 12 bis 25 Gew.-% mindestens eines silikatischen Füllstoffs,
c) 1 bis 15 Gew.-%, bevorzugt 5 bis 10 Gew.-% und besonders bevorzugt 6 bis 8 Gew.-% mindestens eines Koaleszenzmittels, bevorzugt mindestens eines Glykols, besonders bevorzugt Propylenglykol,
d) 0,1 bis 6 Gew.-%, bevorzugt 0,2 bis 4 Gew.-% und besonders bevorzugt 0,5 bis 3 Gew.-% mindestens eines Additivs,
e) 0,5 bis 20 Gew.-%, bevorzugt 1,2 bis 17 Gew.-% und besonders bevorzugt 1,5 bis 16 Gew.-% mindestens eines organischen und/oder anorganischen Pigments und
f) 10 bis 50 Gew.-%, bevorzugt 15 bis 45 Gew.-% und besonders bevorzugt 20 bis 40 Gew.-% Wasser enthält,
wobei die die Farbzusammensetzung bildenden Komponenten in der Summe stets 100,0 Gew.-% ergeben.

12. Farbtonkartenstoß nach Anspruch 10 oder 11, **dadurch gekennzeichnet, dass** der Füllstoff, insbesondere der mindestens eine silikatische Füllstoff, über eine Teilchengröße D50 kleiner oder gleich 30 µm, vorzugsweise kleiner oder gleich 20 µm und besonders bevorzugt kleiner oder gleich 10 µm verfügt und/oder dass der calcitische Füllstoff Calciumkarbonat umfasst und/oder vorzugsweise über eine Teilchengröße D50 kleiner oder gleich 5 µm, vorzugsweise kleiner oder gleich 3 µm und besonders bevorzugt kleiner oder gleich 2 µm verfügt und/oder dass der mindestens eine silikatische Füllstoff Cristobalit umfasst.

13. Farbtonkartenstoß nach einem der Ansprüche 10 bis 12, **dadurch gekennzeichnet, dass**
die Farbzusammensetzung Titandioxid enthält, vorzugsweise mit einer Teilchengröße D50 kleiner oder gleich 4 µm, vorzugsweise kleiner oder gleich 2 µm und besonders bevorzugt kleiner oder gleich 1 µm, und/oder dass die Farbzusammensetzung 1 bis 20 Gew.-%, bevorzugt 2 bis 18 Gew.-% und besonders bevorzugt 5 bis 15 Gew.-% an Titandioxid enthält.

14. Farbtonkartenstoß nach einem der Ansprüche 10 bis 13, **dadurch gekennzeichnet, dass**
die Farbzusammensetzung einen sphärischen partikulären Zusatzstoff, insbesondere sphärische PMMA-Partikel, mit einer Teilchengröße D50 im Bereich von 50 bis 150 µm, bevorzugt im Bereich von 70 bis 120 µm und besonders bevorzugt im Bereich von 90 bis 110 µm, und/oder mindestens ein Verdickungsmittel enthält

15. Farbtonkartenstoß nach einem der Ansprüche 10 bis 14, **dadurch gekennzeichnet, dass**
die aus der Farbzusammensetzung gebildete Farbbeschichtung oder die aus der Vielzahl an Farbzusammensetzungen gebildeten Farbbeschichtungen jeweils eine Pigmentvolumenkonzentration (PVK) im Bereich von 25 bis 50 %, bevorzugt im Bereich von 30 bis 40 % aufweist.

16. Farbtonkartenstoß nach einem der Ansprüche 10 bis 15, **dadurch gekennzeichnet, dass**
das mindestens eine Additiv der Farbzusammensetzung ausgewählt ist aus der Gruppe bestehend aus mindestens einem Entschäumer, mindestens einem Netz- und Dispergiermittel, mindestens einem Konservierungsmittel, insbesondere Topfkonservierungsmittel, und beliebigen Mischungen der genannten Komponenten.

17. Verwendung der Farbzusammensetzung nach einem der Ansprüche 10 bis 16 für die Farbbeschichtung von Farbtonkarten eines Farbtonkartenstoßes, insbesondere nach einem der Ansprüche 1 bis 16, insbesondere eines Farbtonfächers.

18. Verwendung nach Anspruch 17, **dadurch gekennzeichnet, dass**
das zu der Farbzusammensetzung korrespondierende Beschichtungsmaterial gemäß einem der Ansprüche 1 bis 16 für die Herstellung einer farbigen Flächenbeschichtung, insbesondere einer Innenwand-, Außenwand-, Decken- oder Bodenbeschichtung, eingesetzt wird.

19. Verwendung nach Anspruch 18, **dadurch gekennzeichnet, dass**
sich die Farbbeschichtung oder die Vielzahl an Farbbeschichtungen, insbesondere sämtliche Farbbeschichtungen, der Farbtonkarten des Farbtonkartenstoßes, und die Flächenbeschichtung des korrespondierenden Beschichtungsmaterials, insbesondere die Flächenbeschichtungen der jeweils korrespondierenden Beschichtungsmaterialien, paramer, insbesondere metamer, verhalten, insbesondere einen Metamerie-Index (Farbabstand Delta E) kleiner 4, insbesondere 3 und besonders bevorzugt kleiner 2 aufweisen, bestimmt gemäß DIN 6172:2014-10.

20. Farbsystem enthaltend eine Farbzusammensetzung, insbesondere eine Vielzahl an Farbzusammensetzungen, nach einem der Ansprüche 1 bis 16 für Farbbeschichtungen von Farbtonkarten eines Farbtonkartenstoßes, insbesondere Farbtontächers, und ein korrespondierendes Beschichtungsmaterial, insbesondere eine Vielzahl an jeweils korrespondierenden Beschichtungsmaterialien, nach einem der Ansprüche 1 bis 16, für Flächenbeschichtungen, insbesondere Anstrich- oder Putzflächenbeschichtungen, deren Beschichtungen jeweils ein parameres oder metameres Farbpaar bilden, insbesondere einen Metamerie-Index (Farbabstand Delta E) kleiner 4, insbesondere 3 und besonders bevorzugt kleiner 2 aufweisen, bestimmt gemäß DIN 6172:2014-10.

21. Farbtonkarte, insbesondere auf Papier-, Karton- oder Pappe-Basis, mit einer Vorder- und einer Rückseite, enthaltend auf der Vorder- und/oder der Rückseite eine Farbbeschichtung aus einer Farbzusammensetzung gemäß einem der Ansprüche 10 bis 16.
